(19) Europäisches Patentamt
European Patent Office
Office européen des brevets

(11) **EP 2 748 907 B1**

(12) **EUROPÄISCHE PATENTSCHRIFT**

(45) Veröffentlichungstag und Bekanntmachung des Hinweises auf die Patenterteilung:
**30.09.2015   Patentblatt 2015/40**

(21) Anmeldenummer: **12753409.7**

(22) Anmeldetag: **03.08.2012**

(51) Int Cl.:
***H02J 3/00*** *(2006.01)*

(86) Internationale Anmeldenummer:
**PCT/EP2012/065207**

(87) Internationale Veröffentlichungsnummer:
**WO 2013/026675 (28.02.2013 Gazette 2013/09)**

(54) **VERFAHREN ZUR ERMITTLUNG VON KENNGRÖSSEN ZU ENERGIEVERSORGUNGSNETZEN UND SYSTEM ZUR DURCHFÜHRUNG DES VERFAHRENS**

METHOD FOR ASCERTAINING PARAMETERS FOR POWER SUPPLY SYSTEMS, AND SYSTEM FOR CARRYING OUT THE METHOD

PROCÉDÉ DE DÉTERMINATION DE GRANDEURS POUR DES RÉSEAUX D'ALIMENTATION EN ÉNERGIE ET SYSTÈME PERMETTANT DE METTRE LEDIT PROCEDE EN OEUVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2011   AT 12162011**

(43) Veröffentlichungstag der Anmeldung:
**02.07.2014   Patentblatt 2014/27**

(73) Patentinhaber: **Siemens AG Österreich
1210 Wien (AT)**

(72) Erfinder:
• **KUPZOG, Friederich
  A-1190 Wien (AT)**
• **LUGMAIER, Andreas
  A-1140 Wien (AT)**

(74) Vertreter: **Maier, Daniel Oliver
Siemens AG
Postfach 22 16 34
80506 München (DE)**

(56) Entgegenhaltungen:
WO-A2-2008/134997      DE-A1-102005 047 901
US-A1- 2004 243 377

**Beschreibung**

Der Übergang von herkömmlichen Stromnetzen mit zentraler Stromerzeugung in leistungsfähigen Kraftwerken mit hoher Verfügbarkeit zu Netzen mit dezentraler Stromerzeugung, insbesondere auf Basis sogenannter erneuerbarer Energie wie beispielsweise mit Photovoltaik-, Windkraft- oder Biogasanlagen bringt neue Herausforderungen im Bereich der Lastregelung, der Spannungshaltung im Verteilnetz und zur Aufrechterhaltung der Netzstabilität.

Dies unter anderem auch, weil dezentrale Erzeugeranlagen im Gegensatz zu mittleren bis größeren Kraftwerken auch direkt in die unteren Spannungsebenen wie das Niederspannungsnetz oder das Mittelspannungsnetz einspeisen.

Aktuell werden elektrische Energieversorgungsnetze auf ein sogenanntes Worst-Case-Szenario, die mögliche Höchstbelastung, ausgelegt.

Diese Auslegung führt zu hohen Kosten für die Infrastruktur, da Stromnetze im Jahresdurchschnitt typisch nur etwa zu 30 bis 40 % ausgelastet sind.

Eine Reduktion der Höchstbelastung durch Vermeidung von Lastspitzen führt daher zu Kostenvorteilen und zu einer Erhöhung der Versorgungssicherheit.

Die zeitliche Gleichverteilung der Last und damit die Vermeidung von Lastspitzen kann mittels intelligenter Netze durch automatische Steuerungen und Kontrolle von Verbrauchsanlagen erfolgen.

Dazu ist es unter anderem notwendig die Netztopologie, d.h. die einzelnen Netzelemente, wie Erzeugungsanlagen und Verbraucher und die Verbindungen im Detail zu kennen.

Eine händische Erfassung dieser Topologien ist aufgrund der hohen Komplexität der Niederspannungsnetze allerdings nicht zielführend.

Der Erfindung liegt daher die Aufgabe zugrunde, ein Verfahren anzugeben, mit dem die Topologie von Niederspannungsnetzen automatisch erfasst werden kann.

Erfindungsgemäß geschieht dies mit einem Verfahren gemäß Anspruch 1.

Vorteilhafte Ausgestaltungen der Erfindung ergeben sich aus den Unteransprüchen.

Die Erfindung wird anhand von in den Figuren dargestellten Ausführungsbeispielen näher erläutert.

Es zeigen beispielhaft:

Fig. 1 eine schematische Darstellung eines Netzwerkes, von dem nur die Netzanschlußpunkte, nicht aber die Verbindungen zwischen denselben bekannt sind,

Fig.2 ein vermaschtes Netzwerk und

Fig. 3 ein radiales Netzwerk mit Baumstruktur.

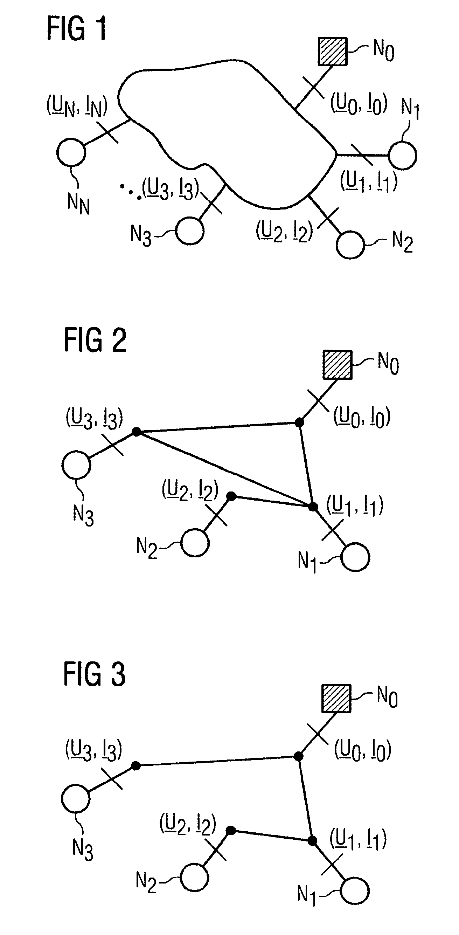

Figur 1 zeigt ein Energieversorgungsnetzwerk von dem die komplexen Strom- und komplexen Spannungsverhältnisse $\underline{U}_1/\underline{I}_1$, $\underline{U}_2/\underline{I}_2$, $\underline{U}_3/\underline{I}_3$ $\underline{U}_N/\underline{I}_N$ an Netzanschlußpunkten $N_0$, $N_1$, $N_2$, $N_3$,... $N_N$ bekannt sind.

Das Netzwerkverhalten wird mit einer komplexen Beitragsmatrix

$$\underline{Z}\underline{i}(t) = \underline{u}(t) \qquad (1)$$

beschrieben, wobei $\underline{u}(t)$ und $i(t)$ Spaltenvektoren der Spannungen und Ströme an den Netzanschlußpunkten $N_0$, $N_1$, $N_2$, $N_3$,... $N_N$ darstellen. Die Spannung am K-ten Netzanschlußpunkt $N_K$ kann nun gemäß

$$\underline{u}_k = \underline{z}_{k,0}\underline{i}_0 + \underline{z}_{k,1}\underline{i}_1 + \underline{z}_{k,2}\underline{i}_2 + \ldots + \underline{z}_{k,N}\underline{i}_N \qquad (2)$$

bestimmt werden. Der Betrag des Matrixelementes $|\underline{z}_{k,j}|$ beispielsweise ist somit ein Maß für den Einfluss des J-ten Netzanschlußpunktes $N_J$, auf die Spannung am K-ten Netzanschlußpunkt $N_K$. Die Beitragsmatrix $\underline{Z}$ gibt für jeden Netzanschlußpunkt $N_0$, $N_1$, $N_2$, $N_3$,... $N_N$ an, welchen Einfluss eine Stromänderung an dem Netzanschlußpunkt auf die Spannungen an den jeweils anderen Netzanschlußpunkten hat.

Jedes Energieversorgungsnetz weist zumindest einen Basis-Netzanschlußpunkt $N_0$ auf, der das Netz mit Energie versorgt. Bei typischen Niederspannungsnetzen handelt es sich dabei üblicherweise um einen Transformator. Bei der Berechnung der Beitragsmatrix kann dieser Basis-Netzanschlußpunkt $N_0$ unberücksichtigt bleiben und damit der Berechnungsaufwand reduziert werden.

Für die Ermittlung der Werte der Beitragsmatrix Z erfolgt eine Reihe von synchronisierten Strom- und Spannungsmessungen an allen Netzanschlußpunkten $N_1$, $N_2$, $N_3$,... $N_N$ mit Ausnahme des Basis-Netzanschlußpunktes $N_0$.

Diese Messungen werden mit sogenannten Smart Meters als fernauslesbaren Stromzählern durchgeführt, mit denen jeder Netzanschlußpunkt $N_1$, $N_2$, $N_3$,... $N_N$ versehen sein muss.

Die gemessenen Daten werden in zwei Messmatrizen $\underline{U}$, $\underline{I}$ zusammengefasst, wobei die erste Messmatrix $\underline{U}$ die gemessenen Spannungswerte und die zweite Messmatrix $\underline{I}$ die gemessenen Stromwerte beinhaltet. Die beiden Messmatrizen mit den Dimensionen $N \times M$ sind in den Gleichungen (3) und (4) dargestellt.

$$\underline{U} = \begin{pmatrix} \underline{U}_1(t_0) & \cdots & \underline{U}_1(t_{M-1}) \\ \vdots & \ddots & \vdots \\ \underline{U}_N(t_0) & \cdots & \underline{U}_N(t_{M-1}) \end{pmatrix} \qquad (3)$$

$$\underline{I} = \begin{pmatrix} \underline{I}_1(t_0) & \cdots & \underline{I}_1(t_{M-1}) \\ \vdots & \ddots & \vdots \\ I_N(t_0) & \cdots & \underline{I}_N(t_{M-1}) \end{pmatrix} \qquad (4)$$

Damit kann Gleichung 1 umformuliert werden in

$$\underline{Z}\,\underline{I} = \underline{U} \qquad (5)$$

Durch Lösung der Matrix-Gleichung für $\underline{Z}$ durch Multiplikation beispielsweise mit der Moore-Penrose- Pseudo-Inversen $\underline{I}^+$, wie sie in Penrose, Roger: " A generalized inverse for matrices". Proceedings of the Cambridge Philosophical Society 51, pp. 406-413, Cambridge, 1954 beschrieben ist, wird $\underline{Z}$ gemäß Gleichung (6) erhalten

$$\underline{Z} = \underline{U}\,\underline{I}^+ \qquad (6)$$

Die Berechnung gemäß Gleichung (5) kann durchgeführt werden, indem die überbestimmte Zahl von linearen Gleichungen der zweiten Messmatrix $\underline{I}$ gemäß Gleichung (4) gelöst wird, beispielsweise mit einem numerischen Ansatz mit least-square Optimierung des Resultates.

Für übliche Niederspannungsnetze mit einer 3-phasigen Struktur kann die Beitragsmatrix $\underline{Z}$ entweder für jede Phase individuell ermittelt werden, es ist aber auch der Ansatz denkbar, dass sich die drei Phasen gleichartig verhalten und somit die Beitragsmatrix in gleicher Weise für die drei Phasen anwenden lässt. Es ist in diesem Fall insbesondere auch möglich, die Messwerte aus unterschiedlichen Phasen zu einer Messmatrix $\underline{U}$, $\underline{I}$ zu kombinieren.

Wie bereits angeführt, liefert die die Beitragsmatrix $\underline{Z}$ für Spannungskontrollanwendungen bereits ausreichend Informationen über die Topologie eines Netzes.

Darüber hinaus kann bei Vorliegen bestimmter Voraussetzungen auch die vollständige Topologie eines Netzes ermittelt werden. Diese Voraussetzungen sind erfüllt bei einem radialen Netz mit einer reinen Baumstruktur, nicht jedoch in einem vermaschten Netzwerk.

Ein Thema ist dabei die Ermittlung der Netzanschlußpunkte an den Enden der Baumstruktur, sogenannten "Leaf nodes".

Diese leaf nodes zeichnen sich dadurch aus, dass der Spannungsabfall an Ihnen bei einem Stromfluss vom Basis-Netzanschlußpunkt $N_0$ über intern liegende Netzanschlusspunkte größer ist als die Spannungsabfälle an den anderen Netzanschlusspunkten. Ein derartiger Leaf node kann daher gemäß

```
For j = 1 to N
    If z_j,j is maximum of line j in Z, and there are
    no other elements in the matrix with equal val-
    ue, add node j to the list of leaf nodes;
End for;
```

bestimmt werden.

Wenn die leaf nodes bekannt sind, kann der jeweilige Pfad zu dem Basis-Netzanschlußpunkt $N_0$ analysiert werden. Dazu wird ein virtueller Stromfluss zwischen leaf node und Basis-Netzanschlußpunkt $N_0$ betrachtet und die durch diesen virtuellen Stromfluss verursachten Spannungsabfälle an den Netzanschlußpunkten $N_1$, $N_2$, $N_3$,... $N_N$ analysiert. Netzanschlusspunkte, die in dem Strompfad liegen weisen einen Spannungsabfall auf. Netzanschlußpunkt außerhalb des Strompfades hingegen nicht.

Auf dieser Basis können die individuellen Zweige der Baumstruktur des Netzes identifiziert werden.

Zur näheren Erläuterung der Erfindung werden zwei numerische Ausführungsbeispiele anhand der Figuren 2 und 3 erläutert.

Fig. 2 zeigt ein vermaschtes Netzwerk mit Basis-Netzanschlußpunkt $N_0$ und drei Netzanschlußpunkten $N_1$, $N_2$, $N_3$ Die Impedanz der leitungen zwischen den Netzanschlußpunkten wird mit jeweil 0,1 OHM angenommen. Die imaginären Anteile der Leitungswiderstände werden mit 0 betrachtet.

Die in den Messmatrizen $\underline{U}$, $\underline{I}$ zusammengefassten gemessenen Strom- und Spannungswerte sind in Tabelle 1 dargestellt.

Tabelle 1

| Value | $f_0$ | $f_2$ | $f_3$ | $f_4$ | $f_5$ | $f_6$ |
|---|---|---|---|---|---|---|
| $f_0$[A] | -8 | -8 | -20 | -5 | -9 | -3 |
| $f_1$[A] | 5 | 2 | 9 | 0 | 1 | 1 |
| $f_2$[A] | 2 | 5 | 3 | 2 | 4 | 1 |
| $f_3$[A] | 1 | 1 | 8 | 3 | 4 | 1 |
| $U_0$[V] | 230.000 | 230.000 | 230.000 | 230.000 | 230.000 | 230.000 |
| $U_1$[V] | 229.767 | 229.467 | 229.433 | 22.9.700 | 229.467 | 229.867 |
| $U_2$[V] | 229.567 | 228.967 | 229.133 | 229.500 | 229.067 | 229.767 |
| $U_3$[V] | 229.933 | 229.933 | 229.467 | 229.800 | 229.733 | 229.933 |

Auf Basis der Messwerte und der folgenden Zusammenhänge

$$\underline{\Delta U_i} = \underline{U_0} - \underline{U_i} \qquad (7)$$

so

$$\underline{\Delta U} = \begin{pmatrix} \underline{\Delta U_1}(t_0) & \cdots & \underline{\Delta U_1}(t_{M-1}) \\ \vdots & \ddots & \vdots \\ \underline{\Delta U_N}(t_0) & \cdots & \underline{\Delta U_N}(t_{M-1}) \end{pmatrix} \qquad (8)$$

and

$$\underline{Z} = \underline{\Delta U}\,\underline{I}^t \qquad (9)$$

4

Wird die Beitragsmatrix $\underline{Z}$ erhalten.

$$Z = \begin{pmatrix} 3.181\text{E-}11\ \Omega & 1.000\text{E-}01\ \Omega & 3.333\text{E-}02\ \Omega \\ 3.181\text{E-}11\ \Omega & 2.000\text{E-}01\ \Omega & 3.333\text{E-}02\ \Omega \\ -3.181\text{E-}11\ \Omega & 1.171\text{E-}08\ \Omega & 6.667\text{E-}02\ \Omega \end{pmatrix}$$

Da es sich um vermaschtes Netz handelt, sind keine weiteren Aussagen über die Topologie möglich.

Fig. 3 zeigt ein Beispiel für ein Radiales Netzwerk mit Baumstruktur.

Die zugehörigen Messwerte sind in Tabelle 2 dargestellt

Tabelle 2

| Value | $f_0$ | $f_2$ | $f_3$ | $f_4$ | $f_5$ | $f_6$ |
|---|---|---|---|---|---|---|
| $f_0$ [A] | -8 | -8 | -20 | -5 | -9 | -3 |
| $f_1$ [A] | 5 | 2 | 9 | 0 | 1 | 1 |
| $f_2$ [A] | 2 | 5 | 3 | 2 | 4 | 1 |
| $f_3$ [A] | 1 | 1 | 8 | 3 | 4 | 1 |
| $U_0$ [V] | 230.0 | 230.0 | 230.0 | 230.0 | 230.0 | 230.0 |
| $U_1$ [V] | 229.3 | 229.3 | 228.8 | 229.8 | 229.5 | 229.8 |
| $U_2$ [V] | 229.2 | 229.2 | 228 | 229.5 | 229.1 | 229.7 |
| $U_3$ [V] | 229.9 | 229.9. | 229.2 | 229.7 | 229.6 | 229.9 |

Die entsprechende Beitragsmatrix lautet:

$$Z = \begin{pmatrix} 0.1\ \Omega & 0.1\ \Omega & 0\ \Omega \\ 0.1\ \Omega & 0.2\ \Omega & 0\ \Omega \\ 0\ \Omega & 0\ \Omega & 0.1\ \Omega \end{pmatrix}$$

In diesem Fall kann auch die zugrunde liegende Baumstruktur ermittelt werden. Dazu werden im ersten Schritt die "leaf nodes, also die End- Netzanschlußpunkte ermittelt. Dies geschieht durch Vergleich der in der Diagonale der Beitragsmatrix liegenden Werte mit den Werten der entsprechenden Zeile. Wenn der in der Diagonale liegende Wert ein Maximum darstellt, handelt es sich bei dem entsprechenden Netzanschlußpunkt um einen leaf node. Dies ist für den zweiten und den dritten Netzanschlußpunkt $N_2$, $N_3$ der Fall da $|z_{22}|$ in Zeile 2 und $|z_{33}|$ in Zeile 3 jeweils ein Maximum darstellen.

Ausgehend von den beiden bekannten leaf nodes dem zweiten und den dritten Netzanschlußpunkt $N_2$, $N_3$ werden nun die Verbindungen zwischen denselben und dem Basis-Netzanschlußpunkt $N_0$ ermittelt. Dazu werden durch anlegen eines virtuellen Stromvektors an die Beitragsmatrix die Spannungsverhältnisse an den Netzanschlußpunkten ermittelt. Diese sind in Tabelle 3 dargestellt.

Tabelle 3

| Level | Voltage [V] | Leaf node 2 | Leaf node 3 |
|---|---|---|---|
| | | | |
| 1 | 0 | {0,3} | {0,1,2} |
| 2 | 0.1 | {1} | {3} |
| 3 | 0.2 | {2} | |

Aus der Tabelle (Spalte 2) ist ersichtlich, dass bei einem Stromfluss zwischen leaf node 2 (Netzanschlußpunkt $N_2$) und dem Basis-Netzanschlußpunkt $N_0$, neben dem Basis-Netzanschlußpunkt $N_0$ auch der dritte Netzanschlußpunkt $N_2$ auf Spannungspegel 0 und somit außerhalb des betrachteten Strompfades liegt. Der erste Netzanschlußpunkt $N_1$

mit Spannungspegel 0,1 liegt hingegen in dem Zweig zwischen dem leaf node 2 (Netzanschlußpunkt $N_2$) und dem Basis-Netzanschlußpunkt $N_0$.

In analoger weise wird auch ein Stromfluss zwischen dem leaf node 2 (Netzanschlußpunkt $N_2$) und dem Basis-Netzanschlußpunkt $N_0$ simuliert und das Ergebnis in Spalte 3 der Tabelle 3 dargestellt.

Aus der Gesamtheit der Ergebnisse kann die Struktur des Netzwerkes abgeleitet werden.

**Patentansprüche**

1.  Verfahren zur Ermittlung von Kenngrößen zu Energieversorgungsnetzen umfassend folgende Verfahrensschritte:

    - an Netzanschlußpunkten $N_1$, $N_2$, $N_3$,... $N_N$ erfolgt eine Reihe von synchronisierten Strom- und Spannungsmessungen
    - die gemessenen Daten werden in zwei Messmatrizen $\underline{U}$, $\underline{I}$ zusammengefasst, wobei die erste Messmatrix $\underline{U}$ die gemessenen Spannungswerte und die zweite Messmatrix $\underline{I}$ die gemessenen Stromwerte beinhaltet, **dadurch gekennzeichnet, dass** aus den Werten der Messmatrizen $\underline{U}$, $\underline{I}$ gemäß

    $$\underline{Z} = \underline{U}\,\underline{I}^{+}$$

    ein überbestimmtes Gleichungssystem aufgestellt wird und unter Zuhilfenahme bekannter Verfahren zur Näherungslösung überbestimmter Gleichungssysteme eine Beitragsmatrix $\underline{Z}$ ermittelt wird, welche die Kenngrößen des Energieversorgungsnetzes umfasst.

2.  Verfahren nach Anspruch 1, **dadurch gekennzeichnet, dass** die Beitragsmatrix Z unter Zuhilfenahme der Moore-Penrose- Pseudo-Inversen $I^{+}$ ermittelt wird.

3.  Verfahren nach Anspruch 1 oder 2, **dadurch gekennzeichnet, dass** die Beitragsmatrix $\underline{Z}$ für Spannungskontrollanwendungen herangezogen wird.

4.  Verfahren nach Anspruch 1 oder 2, **dadurch gekennzeichnet, dass** für radiale Netze aus der Beitragsmatrix $\underline{Z}$ durch Maximumbetrachtungen sogenannte leaf nodes, also Endnetzanschlußpunkte ermittelt werden.

5.  Verfahren nach Anspruch 4, **dadurch gekennzeichnet, dass** für radiale Netze aus der Beitragsmatrix $\underline{Z}$ durch Vergleiche der Spannungspegel der Netzanschlußpunkte die Struktur des Netzes ermittelt wird.

6.  System zur Durchführung eines der Verfahren nach einem der Ansprüche 1 bis 5 **dadurch gekennzeichnet, dass** den Netzanschlußpunkten zumindest teilweise Smart Meter als fernauslesbare Stromzähler zur Messung von Strom- und Spannungswerten zugeordnet sind, dass Mittel zur Ansteuerung der fernauslesbaren Stromzähler und Mittel zur Auswertung der gemessenen Daten, zur Berechnung der Beitragsmatrix $\underline{Z}$ und zur Bestimmung der Topologie des Energieversorgungsnetzes vorgesehen sind.

**Claims**

1.  Method for determining parameters relating to power supply networks including the following method steps:

    - a series of synchronised current and voltage measurements takes place at network connection points $N_1$, $N_2$, $N_3$, ... $N_N$
    - the measured data is combined in two measurement matrices $\underline{U}$, I, wherein the first measurement matrix $\underline{U}$ contains the measured voltage values and the second measurement matrix I contains the measured current values, **characterised in that** an overdetermined equation system is set up from the values of the measurement matrices $\underline{U}$, I according to $\underline{Z}=\underline{U}\,I^{+}$ and a contribution matrix $\underline{Z}$ which includes the parameters of the power supply network is determined with the aid of known methods of the approximate solution of overdetermined equation systems.

2.  Method according to claim 1, **characterised in that** the contribution matrix $\underline{Z}$ is determined with the aid of the Moore-Penrose-Pseudoinverse $I^+$.

3.  Method according to claim 1 or 2, **characterised in that** the contribution matrix Z is used for voltage control applications.

4.  Method according to claim 1 or 2, **characterised in that** so-called leaf nodes, in other words end network connection points, are determined for radial networks from the contribution matrix $\underline{Z}$ by means of maximum considerations.

5.  Method according to claim 4, **characterised in that** the structure of the network is determined for radial networks from the contribution matrix $\underline{Z}$ by comparison of the voltage level of the network connection points.

6.  System for implementing one of the methods according to one of claims 1 to 5, **characterised in that** smart meters as remotely readable meter readers for measuring current and voltage values are assigned at least partially to the network connection points, that means for activating the remotely readable meter readers and means for evaluating the measured data, for calculating the contribution matrix $\underline{Z}$ and for determining the topology of the power supply network are provided.

**Revendications**

1.  Procédé de détermination de grandeurs pour des réseaux d'alimentation en énergie comprenant les étapes suivantes:

    - on effectue à des points de raccordement au réseau $N_1$, $N_2$, $N_3$, ..., $N_N$ une série de mesures synchronisées de courant et de tension,
    - on rassemble les données mesurées dans deux matrices de mesure $\underline{U}$, $\underline{I}$, la première matrice de mesure $\underline{U}$ contenant les valeurs de tension mesurées et la deuxième matrice de mesure $\underline{I}$ contenant les valeurs de courant mesurées,

    **caractérisé en ce que**
    on construit à partir des valeurs des matrices de mesure U, $\underline{I}$ suivant $\underline{\boldsymbol{z}} = \underline{\boldsymbol{U}} \boldsymbol{I}^+$ un système d'équations surdéterminé et on détermine, à l'aide de procédés connus de résolution par approximations de systèmes d'équations surdéterminés, une matrice de contribution $\underline{Z}$, qui comprend les grandeurs du réseau d'alimentation en énergie.

2.  Procédé selon la revendication 1, **caractérisé en ce que** l'on détermine la matrice de contribution Z à l'aide de la matrice pseudo-inverse de Moore-Penrose $I^+$.

3.  Procédé selon la revendication 1 ou 2, **caractérisé en ce que** l'on utilise la matrice de contribution $\underline{Z}$ pour des applications de contrôle de tension.

4.  Procédé selon la revendication 1 ou 2, **caractérisé en ce que** l'on détermine pour des réseaux radiaux, à partir de la matrice de contribution $\underline{Z}$ par des considérations de maximum, des "leaf nodes", donc des points de raccordement au réseau terminaux.

5.  Procédé selon la revendication 4, **caractérisé en ce que** l'on détermine pour des réseaux radiaux la structure du réseau, à partir de la matrice de contribution $\underline{Z}$ par des comparaisons des niveaux de tension des points de raccordement au réseau.

6.  Système permettant la mise en oeuvre des procédés selon l'une quelconque des revendications 1 à 5, **caractérisé en ce que** des compteurs au moins partiellement intelligents sont associés aux points de raccordement au réseau sous forme de compteurs de courant lisibles à distance pour la mesure de valeurs de courant et de tension, **en ce qu'**il est prévu des moyens pour la commande des compteurs de courant lisibles à distance et des moyens pour l'évaluation des données mesurées, pour le calcul de la matrice de contribution $\underline{Z}$ et pour la détermination de la topologie du réseau d'alimentation en énergie.

# FIG 1

$(\underline{U}_N, \underline{I}_N)$

$(\underline{U}_0, \underline{I}_0)$

$N_0$

$N_1$

$N_N$

$(\underline{U}_1, \underline{I}_1)$

$(\underline{U}_3, \underline{I}_3)$

$N_3$

$(\underline{U}_2, \underline{I}_2)$

$N_2$

# FIG 2

$N_0$

$(\underline{U}_3, \underline{I}_3)$

$(\underline{U}_0, \underline{I}_0)$

$(\underline{U}_2, \underline{I}_2)$

$(\underline{U}_1, \underline{I}_1)$

$N_3$

$N_2$

$N_1$

# FIG 3

$N_0$

$(\underline{U}_3, \underline{I}_3)$

$(\underline{U}_0, \underline{I}_0)$

$(\underline{U}_2, \underline{I}_2)$

$(\underline{U}_1, \underline{I}_1)$

$N_3$

$N_2$

$N_1$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PENROSE, ROGER.** A generalized inverse for matrices. *Proceedings of the Cambridge Philosophical Society,* 1954, vol. 51, 406-413